# EUROPEAN PATENT APPLICATION

(11) **EP 1 605 008 A2**
(43) Date of publication of application: **14.12.2005**
(21) Application number: 05253340.3
(22) Date of filing: 31.05.2005
(51) Int. Cl.: C08G 65/336, C08G 63/695, C08G 18/10, C08G 18/12, C08L 75/06, C08L 75/08, C08L 67/00

(54) **Silyl-end capped polymer adhesive compositon**

(30) Priority: 28.05.2004 EP 04076594
(71) Applicant: BOSTIK SA, 92400 Courbevoie (FR)
(72) Inventor: Vosters, Petrus Johannes Cornelius, 5076 CK Haaren (NL); Langezaal, Wilfrid, 6605 DP Wijchen (NL)
(74) Representative: Thomson, Paul Anthony

(57) **Abstract**

The invention provides an adhesive or sealant composition comprising a cross-linkable polymer, a cross-linking catalyst for the polymer, a rheology controller, a water-scavenger, wherein said cross-linkable polymer is silyl-end capped and has an equivalent molecular weight between 10,000 and 20,000.

The invention also provides uncured and cured adhesive compositions, processes for direct glazing of a windscreen on a metallic automotive frame; process for manufacturing the compositions of the invention and uses of the compositions of the invention.

## Description

### FIELD OF THE INVENTION.

This invention relates to an adhesive composition suitable for use for industrial applications where some or all of high viscosity, high mechanical strength, quick curing, excellent adhesion and high initial tack are required. The composition is particularly suitable for use as a motor vehicle windscreen adhesive or sealant. The invention also relates to a process for the preparation of the composition.

### BACKGROUND OF THE INVENTION.

Windscreen adhesives based on silyl-modified polyether or polyester are known from, e.g. EP-A-0819749. These cross-linkable polymers are e.g. a silyl-modified polyether polymer, a silyl-modified polyether-urethane polymer, a silyl-modified polyester polymer or a silyl-modified polyester-polyurethane polymer or their mixtures.
Other compositions are known from EP-A-1038901 and EP-A1153982.
There is nonetheless still a need to improve the properties of this kind of adhesives.

### SUMMARY OF THE INVENTION.

The present invention provides a new and improved adhesive composition.

The invention provides an adhesive or sealant composition comprising a cross-linkable polymer, a cross-linking catalyst for the polymer, a rheology controller, a water-scavenger, wherein said cross-linkable polymer is silyl-end capped and has an equivalent molecular weight between 10,000 and 20,000.

The invention also provides an at least partially cured composition which is the result of the curing of an adhesive or sealant composition comprising a cross-linkable polymer comprising a polyether which is silyl-end capped and a cross-linking catalyst for the polymer, and wherein said at least partially cured composition has a viscosity after 15 minutes curing time, at 85Hz, comprised between 2400 and 4000 Pa.s.

The invention also provides a cured composition which is the result of the curing of the composition of the invention, having a humid cataplasm shear strength above 2 MPa and/or showing a cohesive failure.

The invention also provides a process for direct glazing of a windscreen on a metallic automotive frame, comprising the steps of:
(i) applying a primer on said windscreen;
(ii) applying a composition of the invention on said windscreen and/or frame; and
(iii) securing said windscreen and said frame together.

The invention further provides a process for direct glazing of a primer-free windscreen on a metallic automotive frame, comprising the steps of:
(i) applying on said primer-free windscreen and/or frame a composition comprising a cross-linkable polymer comprising a polyether which is silyl-end capped, a cross-linking catalyst for the polymer, a rheology controller, a water-scavenger, where said composition is preferably the one above; and
(ii) securing said windscreen and said frame together.

In one embodiment of these processes, the composition is, after 15 minutes curing, the partially cured composition of the invention and/or is, after curing, the cured composition of the invention.

The invention also provides the use of the composition of the invention as a motor vehicle windscreen adhesive or in the mounting of electrical components or of components connected thereto.

The invention finally provides a process for the production of the composition of the invention, comprising mixing the components thereof.

### DETAILED DESCRIPTION OF EMBODIMENTS OF THE INVENTION.

### The cross-linkable silyl-modified polymer.

The moisture cross-linkable polymer, that is the prepolymer, is a polymer having silicon-containing chemical groups capable of hydrolysing in the presence of moisture and under the influence of a catalyst to form siloxane linkages.

The silyl-end group can have the following formula:

-(Si(R¹ _{2-b})(X_{b})O)ₘSi(R²)₃₋ₐXₐ

wherein R¹ and R² are the same or different and each represents an alkyl group containing 1 to 20 carbon atoms, an aryl group containing 6 to 20 carbon atoms, an aralkyl group containing 7 to 20 carbon atoms or a triorganosiloxy group of the formula (R')₃SiO-, in which the three R' groups are the same or different and each is a monovalent hydrocarbon group containing 1 to 20 carbon atoms, and when there are two or more R¹ or R² groups, they may be the same or different; X represents a hydroxyl group or a hydrolyzable group and, when there are two or more X groups, they may be the same or different; a represents 0, 1, 2 or 3, b represents 0, 1 or 2 and the value of b in two or more recurring units may be the same or different; m represents an integer of 0 to 19; with the condition that the relation a + Σb ≥ 1 is satisfied.

In one embodiment, The polymer rest may be a polyether polymer, a polyether-urethane polymer, a polyester polymer or a polyester-polyurethane polymer or mixtures thereof.

Referring to the general formula, R¹ and R² each may be an alkyl group such as methyl and ethyl; a cycloalkyl group such as cyclohexyl; an aryl group such as phenyl; an aralkyl group such as benzyl; or a triorganosiloxy group represented by the formula (R')₃SiO- wherein R' is methyl or phenyl, for instance. Particularly preferred for R¹ and R² and R¹ are methyl.

The hydrolyzable group mentioned above for X is not particularly restricted but can be a known hydrolyzable group. Thus, for example, hydrogen, halogen, alkoxy, acyloxy, ketoximate, amino, amido, acid amido, aminoxy, mercapto and alkenyloxy can be mentioned. In view of mild hydrolyzability and ease of handling, alkoxy groups such as methoxy, ethoxy, propoxy and isopropoxy are preferred.

The hydroxyl group and/or hydrolyzable group may be attached, in a varying number of 1 to 3, to one silicon atom but the a + Σb value, namely the total number of hydroxyl and hydrolyzable groups occurring per reactive silicon group is preferably in the range of 1 to 5. When two or more hydroxyl and/or hydrolyzable groups exist in the reactive silicon group, they may be the same or different.

The number of silicon atoms in the reactive silicon group may be one or not less than two but, in the case of the reactive silicon group in which silicon atoms are linked by siloxane bonding or the like, may be about 20 at the maximum.

Among various reactive silicon groups, those of the following general formula are preferred from availability point of view.

-Si(R²)₃₋ₐXₐ

The description that follows will be given with respect to this specific group but can be extended to any group mentioned above.

One preferred embodiment is one in which the group is substituted, i.e. hindered. Hence, said polymer will comprise a sterically-hindered silyl-modified polymer, i.e. comprises the moisture-reactive silicon-containing groups are β-hindered alkoxy-silyl groups. The terminal silyl group will show the following formula:

-A-(CH₂)ₙ-CHR³-CH₂-(Si(R¹ _{2-b})(X_{b})O)ₘSi (R²)₃₋ₐXₐ

where:
- n is zero or 1;
- R³ a saturated or unsaturated lower alkyl group, said lower alkyl group being optionally substituted with an hydroxyl or thiol group; or an hydroxyl group or a thiol group; or a lower alkoxy group; or a lower thioalkoxy group;
A is an oxo, thio, carbamate or ureido linkage.

In one embodiment, preferably:
- n is 1;
- R³ is methyl or ethyl.

The number of silyl groups per polymer depends on the functionality of the polymer rest, and can be from 2 to 8, especially about 2.

The prepolymer bearing the moisture cross-linkable groups preferably contains a polymer rest that is a polyether, a polyester or mixtures of these. An example of a suitable polyether is a polyoxypropylene polymer, for example having two hydrolysable groups at each end of the polymer molecule.

In one specific embodiment, the cross-linkable polymer is of the formula:

(P) [-A-CH₂-CHR³-CH₂-Si (R²)₃₋ₐXₐ]₂

where P represents the polymer rest.
Especially, the cross-linkable polymer can have the following formula:

(P) [-A-CH₂-CHMe-CH₂-SiMe(OMe)₂]₂

More preferably, said cross-linkable polymer is of the formula:

(P) [-O-CH₂-CHMe-CH₂-SiMe(OMe)₂]₂

where P is the rest of a polyetherpolyol or a polyesterpolyol.

"Lower alkyl group" is intended to mean a linear or branched alkyl group having 1 to 4 carbon atoms, inclusive.

When cross-linked such polymers give rubbery elastomers with a degree of cross-link density depending on the number of hydrolysable groups in the prepolymer molecule and on the kind and amount of the cross-linking catalyst and other water-reactive agents. Applicant has found that when the specific equivalent molecular weight (which is the molecular weight Mw divided by the functionality) is between the given values, a valuable product is obtained. So far, this was not recognized in the prior art. Also, the applicant has recognized that hindered cross-linkable polymers also provide improved products (which occurs also independently from the equivalent molecular weight). These polymers are available from Kaneka, under reference SAX 720 and 725, for example.

For the manufacture and other details regarding the polymers, one may make any reference to EP-A-0819749, EP-A-1038901 and EP-A1153982, incorporated herein by reference.

In the following some processes are given (by way of illustration) for the manufacture of the cross-linkable polymers.

These polymers can be manufactured by the following process: provision of a polyol, allyletherification with CH₂=CHR³-(CH₂)ₙ-X (X halogen) to provide a backbone of the following formula:

CH₂=CHR³-(CH₂)ₙ-O-(P)-O-(CH₂)ₙ-CHR³=CH₂

and then hydrosilylation reaction with HSi(R²)₃₋ₐXₐ to give the desired cross-linkable prepolymer.
An alternate route is the reaction between the polyol and an halogenated silyl-containing compound of the formula:

Cl- (CH₂)ₙ-CHR³-CH₂-Si (R²)₃₋ₐXₐ

A further alternate route is the reaction between the polyol and an epoxy compound of the formula (in case where n is 1 and R³ is -OH):

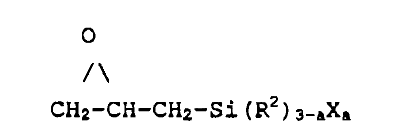

The instant prepolymer in which X is S can be prepared by the following general route comprising: provision of a polyol, allyletherification with
CH₂=CHR³-(CH₂)ₙ-Hal (Hal : halogen) to provide a backbone of the following formula:

CH₂=CHR³-(CH₂)ₙ-O- (P) -O- (CH₂)ₙ-CHR³=CH₂

and then hydrosilylation reaction (e.g. in the presence of AIBN) with HS-(CH₂)ₙ-CHR³-CH₂-Si(R²)₃₋ₐXₐ to give the desired cross-linkable (thio)prepolymer.
Another reaction mechanism suitable for the production of silyl end-capped thioprepolymers is the reaction of an isocyanate-terminated prepolymer with allyl alcohol which is then reacted with mercapto alkoxysilane compound.

Examples of suitable prepolymers containing an ureido linkage may be represented as :

(P) [-NH-CO-NR⁴-(CH₂)ₙ-CHR³-CH₂-Si(R²)₃₋ₐXₐ]₂

where n, a, X, R² and R³ have the meaning above while P is the rest of a polyol, especially a polyether or polyester, and R⁴ is hydrogen or a lower alkyl group, for example a methyl or ethyl group, preferably hydrogen. One specific example is

(P) [-NH-CO-NR⁴-(CH₂)ₙ-CHR³-CH₂-Si(Me)₃₋ₐ(OMe)ₐ]₂

and especially the one in which a is 2 and one in which P is the rest of a polyoxypropylene polymer.

In this case, polyurethane modified polyols may be usable prepolymers according to the invention. Such prepolymers may be based on polyols, preferably diols or triols, such as polyether or polyester polyols or polyalkylenediols, for example polyethylene or polypropylene ether diols or triols or block copolymers or blends comprising any of the above diols or triols. The modification of the polyols is the conversion by reaction with diisocyanates such as MDI, TDI, TMXDI, HMDI or IPDI, to convert the hydroxyl groups to isocyanate groups which are then reacted with sufficient of an amino-alkoxysilane to react with essentially all of the isocyanate groups. This can be represented substantially as the reaction of OCN-(P)-NCO with HNR⁴-(CH₂)ₙ-CHR³-CH₂-Si(Me)₃₋ₐ(OMe)ₐ.

An alternate route is the reaction of a mono-isocyanate on a amine-terminated polyol (e.g. Jeffamine®), i.e. the reaction of H₂N-(P)-NH₂ with OCN- (CH₂)ₙ-CHR³-CH₂-Si (Me)₃₋ₐ(OMe)ₐ.

Examples of suitable prepolymers containing a carbamate linkage may be represented as :

(P) [-O-CO-NH-(CH₂)ₙ-CHR³-CH₂-Si(R²)₃₋ₐXₐ]₂

where n, a, X, R² and R³ have the meaning above while P is the rest of a polyol, especially a polyether or polyester. One specific example is

(P) [-O-CO-NH-(CH₂)ₙ-CHR³-CH₂-Si(Me)₃₋ₐ(OMe)ₐ]₂

and especially the one in which a is 2 and one in which P is the rest of a polyoxyproylene polymer.

These prepolymers can be prepared by directly reacting a mono-isocyanate alkoxysilane with the hydroxyl groups of a polyol as described above.

In general, in the production of silyl end-capped prepolymers having a polyurethane backbone, primary or secondary aminoalkoxysilanes may be used. The modified polyurethanes produced as described above, and these produced by modifications to the processes or compositions so produced which are evident to those in the art from the teaching given above, give advantages of cure in comparison with non-modified polyurethanes.

The molecular weight of the prepolymer may vary between values such that the equivalent weight criteria is fulfilled. In general, the molecular weight Mw of the prepolymer will be from 20000 to 100000, especially 20000 to 40000.

The prepolymer may suitably be present in about 30% to 60% of the composition, preferably 40 to 50%.

### The other components of the composition.

The catalyst used in the composition of the present invention may be any catalyst which has activity in relation to the cross-linking of the hydrolysable groups, such as the silyl groups of prepolymers usable in the present invention. Organotin catalysts, for example, preferably, dibutylbis(2,4-pentanedionato-O,O')tin, dibutyltin-diacetylacetonate (DBTDAA), or dibutyltindilaurate (DBTDL), dibutyltindiacetate, dibutyltindibutylate, tinoctoate or combinations of tin octoate and laurylamine (co-catalyst system), are suitable for this use. Alternatively, orthotitanates and other organic titanates (titanium chelates) such as titanium acetylacetonate, diisopropoxy-titanium-bis(ethylaceto-acetate), dibutoxy-titanium-bis(ethylaceto-acetate), dibutoxy-titanium-bis-acetylacetonate may be used. A suitable quantity of catalyst may be 0,2% to 0,9% by weight of the polymer or as practised in the art.

It is preferred for the compositions of the invention that the moisture content be controlled to prevent immediate cross-linking of the prepolymer resulting in increasing viscosity or even solidification of the composition during storage. Moisture may be imported into the composition in fillers or pigments which may be present. For this reason the composition of the present invention contains one or more water scavengers. Suitable water scavengers are the alkoxysilanes, such as trialkoxysilanes (esp. trimethoxysilanes), and/or amino-, mercapto- or epoxy-containing alkoxysilanes. Examples are gammaglycidoxypropyltrimethoxysilane, N-beta-(aminoethyl)-gamma-aminopropyltrimethoxysilane, aminopropyltrimethoxysilane, trimethoxyvinylsilane, trimethoxymethylsilane or mixtures of two or more thereof, or the methyl- or vinyl-tris(2-butanoneoximino)silanes or, also, products such as Zusatzmittel-TI (Trademark of BAYER). In one embodiment, the water-scavenger further comprises at least one amino-, mercapto- or epoxy- containing alkoxysilane or a siloxane. The water scavenger may suitably be present in from about 1% to about 10% by weight of the composition subject to there being an effective quantity present, preferably from 2% to 8%. The reaction of the water scavengers, especially the alkoxysilanes, with water is also catalysed by the catalysts identified above.

The silane may also preferably act as and/or contain an adhesion promoter, especially when it is an organosilane compound such as, for example, amino-, mercapto- or epoxy-containing alkoxy, suitably tri-alkoxy, silanes. These compounds, and also the mono-alkoxysilanes and the siloxanes, for example hexamethyldisiloxane, take part in hydrolysis and silanol condensation reactions when moisture from outside becomes available. Using suitable silanes or siloxanes as cross-linkers, adhesion promoters or chain-extenders excellent adhesion properties and a well-defined cross-linking density may be achieved. Using an optimal mixture of amino- and epoxy-based trialkoxysilanes it is possible to improve also the water resistance of the cured windscreen sealant. A suitable quantity of adhesion promoter may be from 0,5% to 5% by weight of the composition.

Hence, the composition preferably contains (tri)alkoxysilanes in an amount of from 1 to 10%, preferably 2 to 8% by weight. Preferably the amino- and/or epoxy-silanes represent from 20 to 70% by weight of the total weight of the silanes. The amino-silane to epoxy-silane weight ratio can be from 20:1 to 1:1; epoxy-silane in excess in the same ratios is also possible.

The rheology controller should preferably be capable of giving sufficient thickening for satisfactory application of the uncross-linked composition to inclined or vertical surfaces. The rheology of the composition is judged by reference to the "Storage Modulus" which is measured using a Physical Rheometer MC 100 using an oscillation measurement. The measurement is conducted at a temperature of 20°C using a plate-plate measuring system with a diameter of 25mm and a gap of 1mm. After 100 seconds waiting time the plate is oscillated with 61.5Hz and an angle of 1,2 mRad. The result is given in kPa or kN/m². Reference can also be made to EP-A-0819749, incorporated herein by reference. In one embodiment, the rheology controller comprises a heat-activatable rheology controller.

The preferred minimum storage modulus for satisfactory application as a motor vehicle adhesive is 200 kN/m² and can be up to about 400 kN/m². For general adhesive or sealant use the storage modulus range could suitably be 150 kN/m² to about 450 kN/m². The composition is held in the non-cross-linked state in storage and would in most cases be of insufficient initial viscosity for satisfactory application in the absence of an added rheology controller. It is a preferred feature of the invention that the rheology controller is an effective quantity of an additive which is activatable to the required viscosity by heating although the scope of the invention is not essentially limited to this and other rheological additives known in the art may be used. It is most preferred in the invention that, in the production of the adhesive or sealant compositions, the storage modulus is used as a well-fitting approximation model of the rheology of the composition. Heat-activatable rheological additives include the castor-oil based additives such as, for example, the material available under the Trade Names THIXCIN and THIXATROL. They also give effective sag and slump control. The preferred rheological additives are the family of polyamide waxes such as, for example, the material available under the Trade Name DISPARLON. These are heat-activatable via a mechanism involving the entanglement of polyamide chains. They give excellent thickening with effective sag and slump control and, additionally, they are less susceptible to seeding or to deterioration as a result of excessive application temperature. A suitable quantity of the rheology controller may be about 1% to 10%, preferably 1% to 5% by weight of the composition or as required to fulfill its purpose.

A suitable activation temperature for the polyamide waxes is at least 50°C, preferably at least 60°C, most preferably at least 75°C and up to, for example, 85°C or 95°C. This may fulfill also the function of encouraging the scavenging of moisture from the composition which is particularly effective when a combination of an alkoxysilane water scavenger and a dibutyltin type catalyst is used.

The composition of the invention may suitably or advantageously contain pigment particles. The pigment may comprise carbon black or may comprise one or more inorganic pigment instead of or in addition to the carbon black. A suitable quantity of the pigment may be about 0.5% to 5% by weight of the composition or as required depending on the nature of the pigment.

The composition may also suitable contain fillers, stabilisers, UV-absorbers and/or antioxidants. A suitable filler may be, for example, calcium carbonate. The filler may be present in, for example 25% to 55% by weight of the composition. The precipitated calcium carbonate, with their extremely small particle size distribution and their preferably coated, for example fatty acids, surfaces, may also give a contribution to the viscosity and slump resistance of the compositions. The filler may also contribute to the final mechanical strength of the cured adhesive. An optimal composition may be reached using suitable selected mixtures of preferably coated, precipitated and natural ground calcium carbonates as filler.

A suitable stabiliser may be selected from the hindered amine light stabilisers, such as for example the products available under the Trade Name TINUVIN 770. A suitable UV-absorber may be selected from the benzotriazoles or the benzophenones for example the product available under the Trade Name TINUVIN 327. A suitable antioxidant may be selected from, for example, the products available under the Trade Name IRGANOX 1010 or 1035. Amounts used are classical.

One subsidiary feature of the invention is that the composition is preferably packed in an impermeable (airtight) container to protect it from ambient moisture, preferably after a balanced heat-treatment as described above to encourage the scavenging or emission of moisture from the composition. One suitable impermeable material for the container is high density polyethylene or polyethylene coated with aluminium foil. The container is suitably in the form of a cartridge or respectively in the form of the sausage suitable for use in conjunction with application equipment. A storage stability of up to 1 to 4 years may be anticipated for certain of the compositions, without plasticizer or with a minimum of plasticizer. In one embodiment, in the process for manufacturing the compositions of the invention, the rheology controller is heat-activatable and the composition is heated, preferably after being enclosed in a moisture impermeable container.

It is also most preferred that no organic solvent or any VOC need be present. It is preferred that the composition is solvent-free so as to avoid the environmental disadvantages referred to above.

The present invention also provides a process for the production of adhesives by mixing a cross-linkable polymer and a cross-linking catalyst for the polymer, the process being characterised in that the polymer is moisture cross-linkable, and in that the composition comprises a water-scavenger capable of preventing or delaying the cross-linking of the polymer. This process is particularly effective when a heat-activatable rheology controller is included and the composition is heated, preferably after being enclosed in a moisture-impermeable container, to bring the storage modulus to the desired level and to encourage the moisture-scavenging reactions. Preferably, the process is applied to the production of adhesive compositions as provided by the invention and as described herein.

A preferred order of addition is to initially combine the cross-linkable polymer, the pigment, the rheology controller and the filler under low speed mixing followed by a high speed mixing under vacuum to increase the temperature to at least 40°C and/or, preferably, not more than 45°C. The water scavenger is preferably introduced into this heated mix under vacuum followed by mixing. Preferably the catalyst is added after this under vacuum followed by mixing. The composition so formed is filled into a water-impermeable container and sealed therein. The filled container may then be heated to the required activation temperature to get the required thixotropic characteristics and may be stored without substantial seeding or deterioration.

One preferred composition comprises:

| | |
|---|---|
| SAX-Prepolymer | 30-60 |
| Polyamide wax | 1-5 |
| Trimethoxysilanes mixture | 2-8 |
| Tin catalyst | 0.2-0.9 |
| Calcium stearate-coated, precipitated, CaCO₃ | 25-55 |
| Additives (carbon black, pigments) | 0.5-5 |
| Stabilizers | 0.3-0.6 |

### The compositions of the invention.

The compositions according to the present invention present many advantages. They may be isocyanate-free and organic solvent-free. They are relatively unsusceptible to extremes of processing or application conditions. They are applicable without appreciable sag or slump within a wide range of application temperatures. They give effective skin-formation due to reaction with ambient moisture in as little as 10 to 20 minutes at 20°C and 50% to 60% relative humidity with 3 to 4mm of cure in 24 hours under the same conditions. The feature of rapid skin formation is of great advantage to the user of adhesives, particularly in the fitting of motor vehicle windows either initially or by way of replacement.

In a very surprising aspect thereof the present invention provides a high electrical resistance adhesive or sealant suitable for use in relation to electrical equipment or in any other application where electrical resistance is required. It has been found by the Applicant that the adhesive or sealant of the invention has a resistivity far higher, and of a different order than, that of a conventional polyurethane sealant in automotive use. This finding provides a significant technical advance and can broaden the field of applicability of these materials to the mounting or sealing of electrical components or of components connected thereto, whether in the automotive field or not.

The test results are similar to the ones given in EP-A-0819749, incorporated herein by reference.

The compositions according to the invention successfully met the requirements of the Federal Motor Vehicle Safety Standard 212 (Windscreen mounting):

The invention also provides further compositions. Especially, the invention provides an at least partially cured composition which is the result of the curing of an adhesive or sealant composition comprising a cross-linkable polymer comprising a polyether which is silyl-endcapped and a cross-linking catalyst for the polymer, and wherein said at least partially cured composition has a viscosity after 15 minutes curing time, at 85Hz, comprised between 2400 and 4000 Pa.s, as measured with a rheometer MCR 300 (Physica Paar). This ensures a drive-away time of about 15 minutes, which is a marked advantage over prior art formulations, for which said drive-away time was about one hour. This is obtained thanks to the specific viscosity characteristics of the composition of the invention. At the initial time, the viscosity is such that the compositions of the invention are still gunnable at room temperature. Due to the higher initial viscosity under crash conditions and the higher viscosity built up, the composition of the invention is extremely suitable as a windscreen adhesive. The initial viscosity is estimated at 3 minutes, at 1 Hz, and can be comprised between broad limits, e.g. between 30000 and 130000, preferably between 50000 and 90000 Pa.s. For the partially cured compositions of the invention, it is preferred that tanδ be equal or less than 0,2. Also, one may prefer that the G' and G'' modulus at 85Hz be between 1100 and 1800 kPa and 350 and 650 kPa, respectively.
The measurements are carried out as follows. The viscosity parameters are measured using a Physica Paar Rheometer MCR300 using an oscillation measurement (frequency sweep). The measurement is conducted at a temperature of 23°C using a plate-plate measuring system with a diameter of 25mm and a gap of 1mm. During the first period, i.e. waiting time of 60 seconds the measuring plate is oscillated with a frequency of 1Hz with an angle of 0.04 mrad. After this waiting time, the viscosity of the adhesive is measured for 15 minutes by an oscillation measurement at 1Hz and with an angle of 0.04 mrad. After the waiting time (1 min) and the curing time (15 min) a frequency sweep is started. The frequency sweep is started at 1Hz and the final frequency is 85Hz. The angle, during the frequency sweep, is 0.04 mrad. Measurements are carried out after the frequency sweep step.

Once cured, the compositions of the invention exhibit good properties. The invention hence provides also these cured compositions.

In one embodiment, the invention provides for a cured composition which is the result of the curing of an adhesive or sealant composition comprising a cross-linkable polymer comprising a polyether which is silyl-end capped and a cross-linking catalyst for the polymer, said cured composition having a humid cataplasm shear strength above 2 MPa. These values are preferably attained at 7, 14 and 21 days, under Renault testing method.

In a further embodiment, the invention provides for a cured composition which is the result of the curing of an adhesive or sealant composition comprising a cross-linkable polymer comprising a polyether which is silyl-end capped and a cross-linking catalyst for the polymer, said cured composition showing a cohesive failure. This is quite unexpected. In fact, the cured compositions show, compared to the prior art, higher elongation at break values (evidencing better tear resistance), which in general is associated with adhesive failure. By contrast, the invention provides cohesive failure, which is a marked advantage over the prior art when associated with elongation at break values higher than 300%, preferably higher than 400%.

### EXAMPLES

The manufacturing process is the following. The polymer, the pigment, part of the silanes mixture, and the filler are mixed first under low speed then high speed. The final temperature is 85-95°C. The rest of the silanes mixture is introduced into this heated mix under vacuum followed by mixing. The catalyst is added after this under vacuum followed by mixing. The composition so formed is filled into a water-impermeable container and sealed therein. The filled container is then be heated to the temperature of at least 60°C.

The prepolymers are SAX 720 and SAX 725 available from Kaneka (Japan); they both are difunctional with more than 90% of silyl end-groups per terminal function, with equivalent weight of about 10000 and 12500, respectively.

The terminal function is -SiMe(OMe)₂. The polymer backbone is a polypropyleneoxide.

The compositions are applied on a strip of 25.0mm×12.5mm, with a thickness of layer of 2mm, and curing is carried out for 14 days at 23°C/50%RH.

### The following compositions are manufactured:

| Component | Sample A | Sample B | Sample C |
|---|---|---|---|
| SAX-Prepolymer | 48,04 | 47,92 | 47.82 |
| Polyamide wax | 3 | 4 | 3,55 |
| Trimethoxysilanes mixture | 4,72 | 4,59 | 4,72 |
| Tin catalyst | 0,85 | 0,51 | 0,65 |
| Calcium stearate-coated, precipitated, calcium carbonate | 41,4 | 41 | 41,28 |
| Additives (carbon black, pigments, stabilizers) | 1,99 | 1,98 | 1.99 |
| | | | |

The following methods are used (for H piece standard ISO 9046, for Dumbbels ISO 37 and for Tear resistance ISO 34):

| Cataplasm according to Renault | |
|---|---|
| | |
| SHEAR | |
| D47-1165 | |
| | |
| Dimension: (12,5mm*25mm*2mm) | |
| Substrate: Aluminium (AlMgSi 0.5) | |
| Test speed: 10 mm/min | |
| | |
| H0 | after 14 days curing @ 50%RH / 23° C |
| H7 | after H0 and 7 days @ 100%RH / 70° C; 2h at -20° C; min. acclimatisation time of 2h/ max. of 4h @ 50%RH and 23° C. |
| H14 | after H0 and 14 days @ 100%RH / 70° C; 2h at -20° C; min. acclimatisation time of 2h/ max. of 4h @ 50%RH and 23° C. |
| H21 | after H0 and 21 days @ 100%RH / 70° C; 2h at -20° C; min. acclimatisation time of 2h/ max. of 4h @ 50%RH and 23° C. |

| Cataplasm according to volvo | |
|---|---|
| PEEL TEST | |
| DOC01280084 | |
| | |
| Dimension: (200mm*25mm) | |
| Ceramic glass from VOLVO | |
| Test: 90 ° Peel test | |
| | |
| STEP 1 | 7 days curing @ 50% RH and 23°C |
| STEP 2 | STEP 1 and 7 days water storage, distilled water 23° C |
| STEP 3 | STEP 2 and 7 days @ 70°C |
| STEP 4 | STEP 3 and 7 days @ 70° C and 100% RH |
| STEP 5 | STEP 4 16 hours @ -16° C |

| Vienna cycle according to Bombardier | |
|---|---|
| | |
| SHEAR | |
| | |
| Dimensions: (12,5mm*25mm*6mm) | |
| Substrate: Stainles steel EN1.4319 | |
| Test speed: 10 mm/min | |
| | |
| step 1 | 15hours @ 80° C and 95% RH |
| step 2 | 8 hours @ -30° C |
| step 3 | 15hours @ 80° C and 95% RH |
| step 4 | 8 hours @ -30° C |
| step 5 | 15hours @ 80° C and 95% RH |
| step 6 | 8 hours @ -30° C |
| step 7 | 15hours @ 80° C and 95% RH |
| step 8 | 8 hours @ -30° C |
| step 9 | 15hours @ 80° C and 95% RH |
| step 10 | 8 hours @ -30° C |
| step 11 | 48hours @ 80° C and 95% RH |

### Test results

The following table summarizes the results thus obtained. nd stands for not determined.
# alu/primer M according to Renault;
## cataphoresis/primer M according to Renault;
* ceramic glass/primer M;
tC stands for thin cohesive
C stands for cohesive
MF stands for material failure

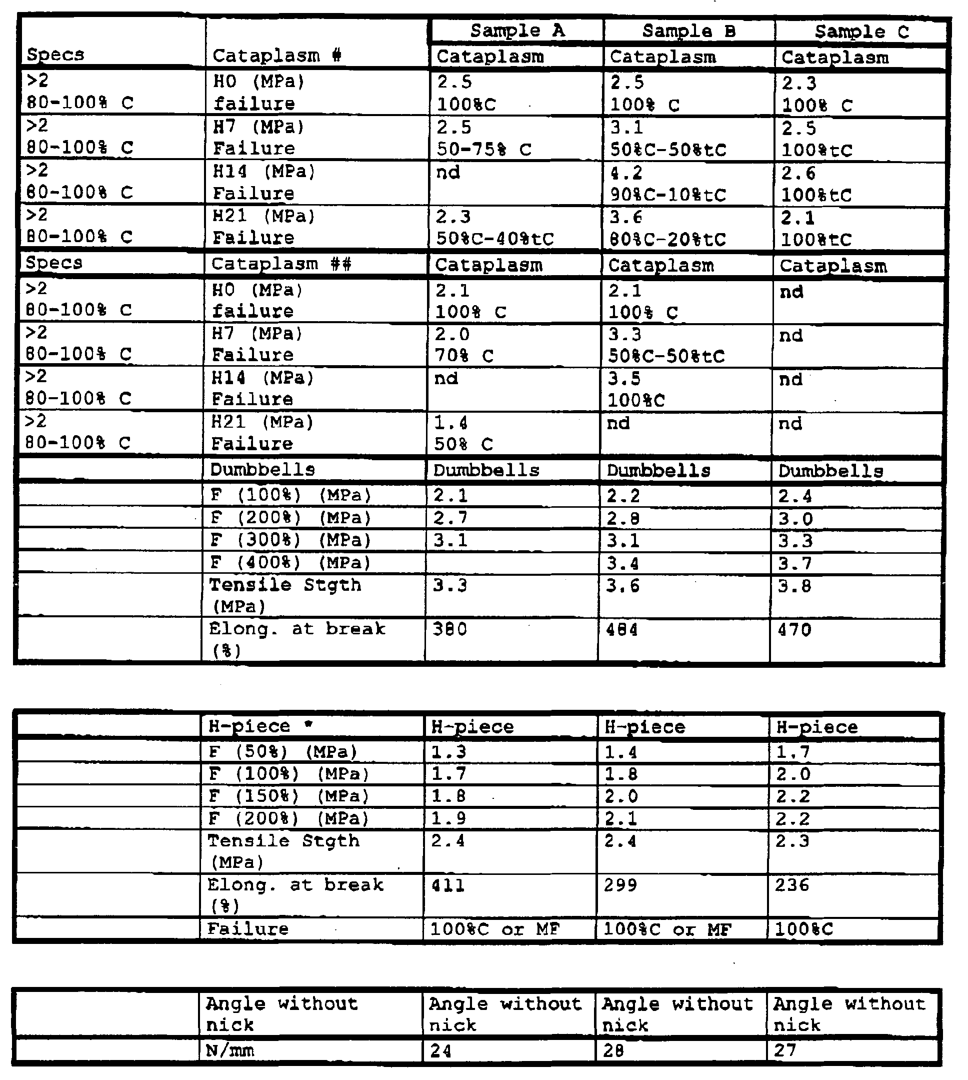

For sample C, the following results have also been obtained.

| Peel test (Volvo Ceramic glass/IPA) no primer, Cataplasm according to Volvo DOC012800B4 | | |
|---|---|---|
| | Step 1 | 100% C |
| | Step 2 | 100% C |
| | Step 3 | 100% C |
| | Step 4 | - |
| | Step 5 | 100% C |
| Bombardier shear test, primer M | | |
| Before Vienna cycle | After 2 weeks curing | 2.4 MPa |
| | Failure mode | 100% C |
| After Vienna cycle | After Vienna cycle (Step 1 → 11) | 2.9 MPa |
| | failure mode | 100% C |

For sample C, similar tests are carried out for ceramic glass without Pb (FERRO 14279 VSG)/IPA (no primer) and for ceramic glass without Pb (FERRO 14279 VSG)/primer M; no substantial difference is seen in terms of F values (50-200%), tensile strength, elongation at break and type of failure.

## Claims

1. An adhesive or sealant composition comprising a cross-linkable polymer, a cross-linking catalyst for the polymer, a rheology controller, a water-scavenger, wherein said cross-linkable polymer is silyl-end capped and has an equivalent molecular weight between 10,000 and 20,000.

2. The composition of claim 1, wherein the number of silyl groups is from 2 to 8, especially about 2.

3. The composition of claim 1 or 2, wherein, in said polymer, the silyl-end group has the following formula:
-(Si(R¹ _{2-b})(X_{b})O)ₘSi(R²)₃₋ₐXₐ
wherein, R¹ and R² are the same or different and each represents an alkyl group containing 1 to 20 carbon atoms, an aryl group containing 6 to 20 carbon atoms, an aralkyl group containing 7 to 20 carbon atoms or a triorganosiloxy group of the formula (R')₃SiO-, in which the three R' groups are the same or different and each is a monovalent hydrocarbon group containing 1 to 20 carbon atoms, and when there are two or more R¹ or R² groups, they may be the same or different; X represents a hydroxyl group or a hydrolyzable group and, when there are two or more X groups, they may be the same or different; a represents 0, 1, 2 or 3, b represents 0, 1 or 2 and the value of b in two or more recurring units may be the same or different; m represents an integer of 0 to 19; with the condition that the relation a + Σb ≥ 1 is satisfied.

4. The composition of claim 3, wherein, in said polymer, the silyl-end group has the following formula:
-A-(CH₂)ₙ-CHR³-CH₂-(Si(R¹ _{2-b})(X_{b})O)ₘSi(R²)₃₋ₐXₐ
where:
- n is zero or 1;
- R³ a saturated or unsaturated lower alkyl group, said lower alkyl group being optionally substituted with an hydroxyl or thiol group; or an hydroxyl group or a thiol group; or a lower alkoxy group; or a lower thioalkoxy group;
A is an oxo, thio, carbamate or ureido linkage.

5. The composition as claimed in any one of claims 1 to 4, wherein in said polymer the silyl-end group comprises the following formula:
-Si (R²)₃₋ₐXₐ
wherein R², X and a have the meaning as given in claim 3.

6. The composition as claimed in any one of claims 1 to 5, wherein the polymer comprises a polymer rest which is a polyether polymer, a polyether-urethane polymer, a polyester polymer or a polyester-polyurethane polymer or mixtures thereof.

7. The composition as claimed in any preceding claim, wherein the water-scavenger comprises at least one alkoxysilane.

8. The composition as claimed in any preceding claim, wherein the water-scavenger further comprises at least one amino-, mercapto- or epoxy- containing alkoxysilane or at least one siloxane.

9. The composition as claimed in any preceding claim, wherein the rheology controller comprises a heat-activatable rheology controller.

10. The composition as claimed in any preceding claim, wherein the rheology controller is a polyamide wax.

11. The composition as claimed in any preceding claim, wherein the catalyst is a tin catalyst.

12. An at least partially cured composition which is the result of the curing of an adhesive or sealant composition comprising a cross-linkable polymer comprising a polyether which is silyl-end capped and a cross-linking catalyst for the polymer, and wherein said at least partially cured composition has a viscosity after 15 minutes curing time, at 85Hz, comprised between 2400 and 4000 Pa.s.

13. A cured composition which is the result of the curing of the composition of any one of claims 1 to 12 having a humid cataplasm shear strength above 2 MPa.

14. A cured composition which is the result of the curing of the composition of any one of claims 1 to 12 showing a cohesive failure.

15. A process for direct glazing of a windscreen on a metallic automotive frame, comprising the steps of:
(i) applying a primer on said windscreen;
(ii) applying a composition of any one of claims 1 to 11 on said windscreen and/or frame; and
(iii) securing said windscreen and said frame together.

16. A process for direct glazing of a primer-free windscreen on a metallic automotive frame, comprising the steps of:
(i) applying on said primer-free windscreen and/or frame a composition comprising a cross-linkable polymer comprising a polyether which is silyl-end capped, a cross-linking catalyst for the polymer, a rheology controller, a water-scavenger; and
(ii) securing said windscreen and said frame together.

17. The process of claim 16, in which said composition is according to any one of claims 1 to 11.

18. The process of any one of claims 15 to 17, in which said composition is, after 15 minutes curing, the composition of claim 12.

19. The process of any one of claims 15 to 18, in which said composition is, after curing, the composition of claim 13 and/or 14.

20. Use of the composition as claimed in anyone of claims 1 to 12 as a motor vehicle windscreen adhesive.

21. Use of the composition as claimed in anyone of claims 1 to 12 in the mounting of electrical components or of components connected thereto.

22. A process for the production of a composition as claimed in anyone of claims 1 to 11, comprising mixing the components thereof.

23. The process as claimed in claim 22, wherein the rheology controller is heat-activatable and the composition is heated, preferably after being enclosed in a moisture impermeable container.
